# EUROPEAN PATENT SPECIFICATION

(11) **EP 1 849 265 B1**
(45) Date of publication and mention of the grant of the patent: **11.03.2009**
(21) Application number: 06710881.1
(22) Date of filing: 10.02.2006
(51) Int. Cl.: H04L 12/46, H04L 12/18

(54) **METHOD AND NODES FOR HANDLING BROADCAST MESSAGES OVER AN ACCESS DOMAIN**
VERFAHREN UND KNOTEN ZUR HANDHABUNG VON RUNDSENDENACHRICHTEN ÜBER EINE ZUGANGSDOMÄNE
PROCEDE ET NOEUDS PERMETTANT DE PRENDRE EN CHARGE DES MESSAGES DIFFUSES DANS UN DOMAINE D'ACCES

(30) Priority: 14.02.2005 US 651971 P; 25.04.2005 US 674307 P; 09.02.2006 US 349997
(43) Date of publication of application: 31.10.2007
(73) Proprietor: Telefonaktiebolaget LM Ericsson (publ), 164 83 Stockholm (SE)
(72) Inventor: MONETTE, Sylvain, Blainville, Québec J7B 1R3 (CA); GIGUERE, Mathieu, Vaudreuil-sur-le-lac, Québec J7V 8P3 (CA); JULIEN, Martin, Laval, Québec H7P 5H1 (CA); TREMBLAY, Benoit, Laval, Québec H7Y 1G2 (CA)
(74) Representative: HOFFMANN EITLE
(86) International application number: PCT/IB2006/050451
(87) International publication number: WO 2006/085286

(56) References cited:
- US-A1- 2004 022 221
- US-A1- 2004 047 322
- US-B1- 6 553 421

## Description

Priority Statement Under35 U.S.C. S.119 (e) & 37 C.F.R. S.1.78

This non-provisional patent application claims priority based upon the prior U.S. patent applications entitled 'Poly project' and 'Access node-edge node complex protocol (AEP)', having respective application number US-651971, filed February 14, 2005, in the names of Sylvain Monette, Mathieu Giguere, Martin Julien and Benoit Tremblay, and application number US674307, filed April 25, 2005 in the names of Sylvain Monette, Mathieu Giguere, Martin Julien and Benoit Tremblay.

### BACKGROUND OF THE INVENTION

### Field of the Invention

The present invention relates to a method and nodes for handling broadcast messages in an access domain using service bindings.

### Description of the Related Art

Recent years have seen the explosion of Internet Protocol (IP) networks. Initially developed to allow universities and researchers to communicate and cooperate in research projects, it has grown into networks offered at a mass-market level. Nowadays, it is normal for households to have a connection to an IP network to surf the world-wide-web, play interactive games, carry Voice over IP, download documents and softwares, make electronic business transactions, etc.

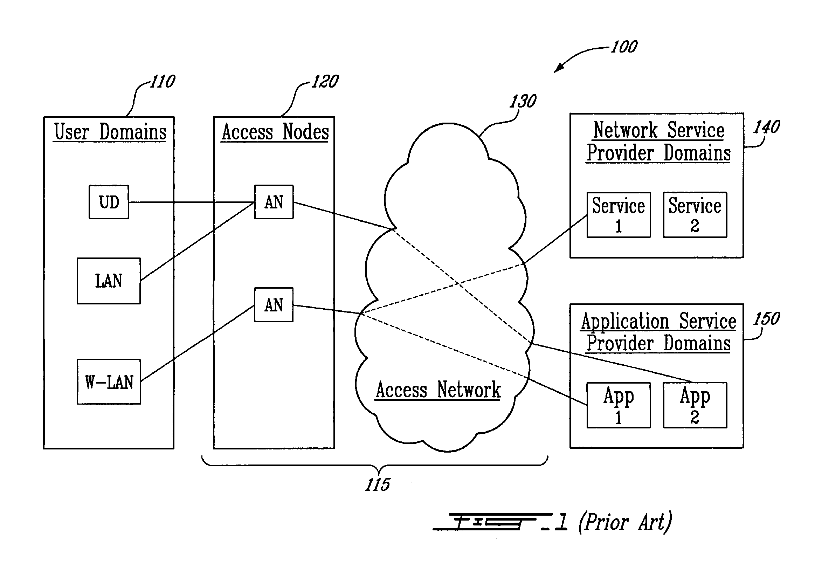

Reference is now made to Figure 1, which represents a prior art example of an IP network 100. Typically, an IP network is composed of an access domain 115, network service provider domains 140 and application service provider domains 150. The access domain 115 includes Access Nodes (AN) 120 and an access network 130, such as an IP network. The ANs 120 are network providers, which can offer access to the IP network 130 to user domains 110. The user domains 110 include for example User Devices (UDs) (such as computers, mobile phones, personal digital assistants, etc.), Local Area Networks (LANs) and Wireless-LANs (W-LANs). The user domains communicate with the ANs over various possible technologies. Amongst those technologies can be found dial-up connections and Asymmetric Distribution Subscriber Line connections over telephone lines, cable modems connecting over television cable networks, or wireless communications. The access network 130 is composed of a group of independent switches and/or routers, which task is to route incoming data traffic based on a destination address embedded therein. As for the network service provider domains 140, they may correspond for example to Voice over IP services, while the application service provider domains 150 may correspond to electronic banking and electronic business transactions.

Though Figure 1 depicts three user domains, two Access Nodes, two service provider domains and two application service domains, IP networks 100 typically include several thousands of user domains, tenths of Access Nodes, hundreds of service provider domains and application service provider domains. As to the access network 130, it is common to encounter networks including hundreds of routers. It is thus understood that Figure 1 depicts a highly simplified IP network 100 for clarity purposes.

The initial principle at the basis of IP networks is to rely on switches and routers, which perform as few and as little operations as possible before routing incoming data traffic towards their final destination. For doing so, different kinds of messages are available: Unicast messages, Multicast messages and Broadcast messages. For each of those three types of messages, ranges of addresses are allocated for each type of messages. Unicast messages are used to exchange messages between one sender and one recipient. Multicast messages allow one sender to reach multiple recipients. As to Broadcast messages, they are used to reach all switches of the IP network in a same segment. Such a router is depicted in document US-B1-6553421.

More particularly, Broadcast messages are generated by User Domains, and their particularity lies in the fact that upon receipt of a Broadcast message at one of the switch of the network, the Broadcast message is retransmitted to all switches known to the recipient switch. Therefor, in such expansive IP networks, servicing thousands of User Domains, Broadcast message can become an important nuisance, seriously ole impacting the performance of the IP network, as depicted in document US-A1-2004 047322.

There is currently no known solution to the problems associated with the explosion of the number of user devices and of service providers offering services on IP networks. Furthermore, no long-term solution has been identified to allow a tangible solution to the potential nuisance caused by Broadcast messages over large IP networks servicing thousands of User Domains.

Accordingly, it should be readily appreciated that in order to overcome the deficiencies and shortcomings of the existing solutions, it would be advantageous to have a method and nodes for efficiently handling broadcast messages, without unnecessarily overloading the network. The present invention provides such a method and nodes.

### Summary of the Invention

The present invention efficiently allows thousands of user domains and access nodes to handle broadcast messages over an access domain by tunneling the broadcast message within Unicast messages, thereby reducing the traffic generated by broadcast mechanisms and broadcast messages.

For doing so, the method of the present invention handles broadcast messages over an access domain, by receiving from a user domain at an access node a broadcast message from a user domain. Then, the method proceeds with intercepting at the access node the received broadcast message and forwarding the received broadcast message to an access edge node of the access domain in a Unicast message, thereby intercepting the broadcast mechanism.

Another aspect of the present invention relates to an access edge node for handling tunneled broadcast messages transmitted over an access domain. The access edge node includes an input unit, a controlling unit and a broadcast handler. The input unit receives messages. The controlling unit identifies from the received messages at the input unit which messages are tunneled broadcast messages. The broadcast handler detunnels the identified tunneled broadcast messages and handles the detunneled broadcast messages.

In another aspect, the present invention is directed to an access node for handling broadcast messages received from user domains. The access node comprises an input unit, a controlling unit, a broadcast handler and an output unit. The input unit receives messages from user domains. The controlling unit identifies from the received messages which messages are broadcast messages. The broadcast handler tunnels each of the identified broadcast messages in a Unicast message destined to an access edge node, and the output unit transmits the Unicast message.

### Brief Description of the Drawings

For a more detailed understanding of the invention, for further objects and advantages thereof, reference can now be made to the following description, taken in conjunction with the accompanying drawings, in which:

Figure 1 is a prior art example of an IP network;

Figure 2 is a schematic exemplifying a network in which the present invention has been incorporated;

Figure 3 is a simplified flowchart of a method for handling broadcast messages in accordance with the present invention;

Figure 4 is a schematic representation of an access edge node in accordance with the teachings of the present invention;

Figure 5a is an exemplary tabular representation of the content of a service agents management and control unit in accordance with the present invention;

Figure 5b is an exemplary tabular representation of the content of a service bindings hosting unit in accordance with the teachings of the present invention;

Figure 6 is a schematic representation of an access node in accordance with the teachings of the present invention; and

Figure 7 is a diagram representing modifications performed on an upstream broadcast message in accordance with the present invention.

### Detailed Description of the Preferred Embodiments

The innovative teachings of the present invention will be described with particular reference to various exemplary embodiments. However, it should be understood that this class of embodiments provides only a few examples of the many advantageous uses of the innovative teachings of the invention. In general, statements made in the specification of the present application do not necessarily limit any of the various claimed aspects of the present invention. Moreover, some statements may apply to some inventive features but not to others. In the drawings, like or similar elements are designated with identical reference numerals throughout the several views.

The present invention provides a method and nodes for handling broadcast messages in an access domain. For doing so, an access node and an access edge node are adapted to allow for an efficient transmitting of broadcast messages in accordance with the teachings of the present invention. More particularly, in the present invention, broadcast messages transmitted from user domains are received at an access node and intercepted. The access node tunnels the broadcast messages within Unicast messages and transmits the Unicast messages to the access edge node. Thus, instead of being broadcasted throughout the access domain, the broadcast messages are intercepted from their point of entry within the access domain, i.e. at the access nodes, and transmitted directly to the access edge node, thereby reducing the traffic generated by broadcast messages over the access domain. The invention also provides at the access edge node the capabilities to identify the tunneled broadcast messages and their detunneling so as to allow their proper handling by the access edge node.

In accordance with another possible embodiment of the present invention, the access node and access edge node are further capable of managing service bindings for ruling data traffic therebetween over the access domain. More particularly, for doing so, the access edge node includes a service agent unit, which manages and controls service agents. Each of the service agents corresponds to a service provider domain, and manages and controls therefor a Virtual Local Area Network (VLAN) over the access domain. Thus, whenever a user domain wishes to communicate with a selected one of the service provider domains, a service request related message is sent to the access edge node. The service request related message includes information identifying one of the service provider domains and one of the user domains. The access edge node determines whether one of the service agent corresponds to the service provider domain identified in the service request related message, and if so creates a service binding for the received service request related message. The service binding identifies one of the service agents, user domain information and access domain transport primitives. Then, the access node serving the requesting user domain is informed of the creation of the service binding, and enforcement of the service binding is performed at the access node and access edge node so as to aggregate data traffic therebetween in accordance with the created service binding. Thus, in accordance with this other embodiment, when the broadcast messages received at the access node from one of the user domain correspond to one of the established service binding, the tunneled broadcast message includes an identifier corresponding to the service agent so as to allow the access edge node a faster treatment of the tunneled broadcast message. Furthermore, this embodiment also allows isolation of user networks from each other so as to insure privacy.

The following paragraphs will provide a more detailed explanation of the method and the access edge node and access node of the present invention, and how they handle broadcast messages in the context of the present invention so as to reduce overload of the access domain.

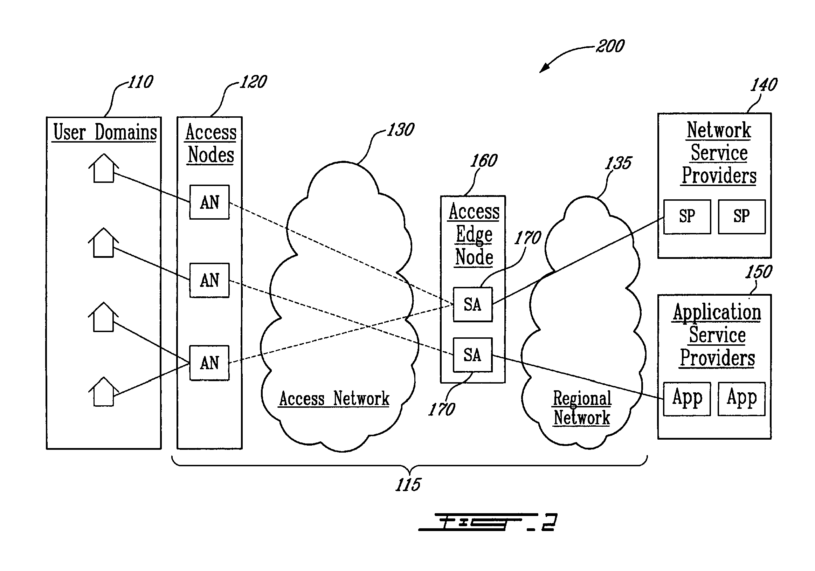

To understand the present invention and its inventive mechanisms, reference is now made to Figure 2, which is a schematic exemplifying a network 200 in which the present invention has been incorporated. The schematic representation of the network 200 has been simplified for clarity purposes, and the various elements depicted have been grouped by similar functions rather than graphically representing geographical network entities. However, each group of similar functions would typically correspond to a multitude of physical network entities performing those specific functions, geographically scattered throughout the network 200. The schematic representation of the network 200 includes user domains 110, an access domain 115 (including: access nodes 120, an access network 130, an access edge node 160 and a regional network 135), network service providers 140, and application servers 150. An exhaustive description and examples for each of those elements will be provided in the following paragraphs, with continued reference to Figure 2.

The network 200 corresponds to one or multiple data networks communicating together. Thus, the network 200 could be operated by one or multiple operators. As data networks are usually supported by a number of different operational entities and/ or organizations, it is necessary to define how those entities and organizations can successfully communicate. For this reason, data networks are usually explained and detailed using the Open System Interconnection (OSI) model. The OSI model defines a networking framework for implementing protocols in seven layers. Those seven layers are in the respective order: 1) Physical layer; 2) Data Link Layer; 3) Network Layer; 4) Transport Layer; 5) Session Layer; 6) Presentation Layer and 7) Application Layer. Each layer corresponds to an aspect to be considered and actions to be undertaken when performing data transmission over a data network. Using the OSI model to describe the network 200 of the present invention, it is possible to layer some of the various protocols used and/or supported by the network of the present invention as follows:

Layer 2: Ethernet, Asynchronous Transfer Mode;

Layer 3: Internet Protocol (IP) versions 4 and 6,

Layers 4 and 5: Transmission Control Protocol (TCP) and User Datagram Protocol (UDP); and

Layers 6 and 7: various presentations and applications protocols currently existing and to come.

It should be understood that the above list of protocols is provided for exemplary purposes only, and does not limit in any way the protocols supported by the present invention.

Turning now to the access domain 115, it is possible to summarize its function as a means to provide end-to-end access between the user domains 110 and the network service providers 140 and application service providers 150. The access domain includes the access nodes 120, the access network 130, the regional network 135 and the access edge node 160. Thus, the access domain 115 is not an entity per se; it is rather an aggregation of components, which when interconnected together directly or indirectly, physically wirelessly or electronically, act as a domain for providing access, hence its name 'access domain'. It should thus be clear that the current representation of the access domain 115 including only one access node 120, one access network 130, one access edge node 160 and one regional network 135 does not mean that such entities are found single in the access domain, but rather that for sake of clarity only one such entity is represented. The following paragraphs explain in greater details the various components of the access domain.

The access nodes 120, which also include access gateways (not shown), represent the first component of the access domain 115. The access nodes 120 typically refer to access providers, which allow user domains 110 accesses to the access network 130, upon, for example, subscription or pay-per-usage basis. Such access can be made possible using various mediums and technologies. Amongst the possible mediums are cable, landline phone, and wireless phone. As to the possible technologies, Integrated Services Digital Network (ISDN) and Asymmetric Digital Subscriber Line (ADSL), Worldwide Interoperability for Microwave Access (WiMax) are examples of possible technologies. However, it should be noted that the present inventioneven is not limited to those mediums or technologies. Also,though only three access nodes have been depicted, it should be noted that the network 200 potentially includes hundreds or thousands of access nodes.

The access domain also includes the access network 130 and the regional network 135 which will be discussed together. The primary function of the access network 130 and the regional network 135 is to provide end-to-end, and independent transport between the access nodes 120 and the network service providers 140 and the application service providers 150. The access network 130 and regional network 135 are networks capable of tasks such as: aggregation, switching and routing downstream and upstream data traffic. The access network 130 is preferably capable of using Ethernet, or other similar protocols, which correspond to the Layer 2 of the OSI model, but is not limited thereto. It could advantageously be capable of supporting also Layer 3 protocols such as IPv4 and/or IPv6. The regional network 135 preferably supports Ethernet and/or IP and MPLS, and possibly other Layer 3 capable protocols. Furthermore, it should be noted that the access network 130 and the regional network 135 could be operated and/or managed by a single operator or by many different operators.

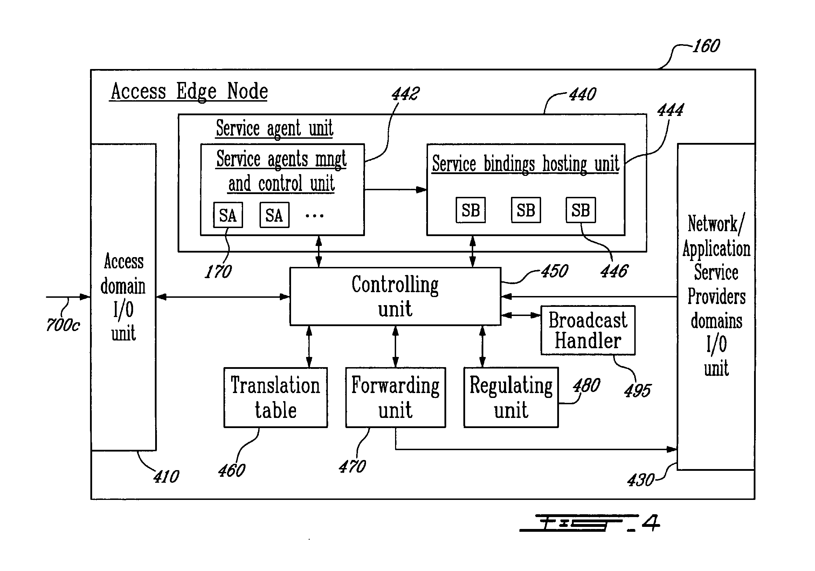

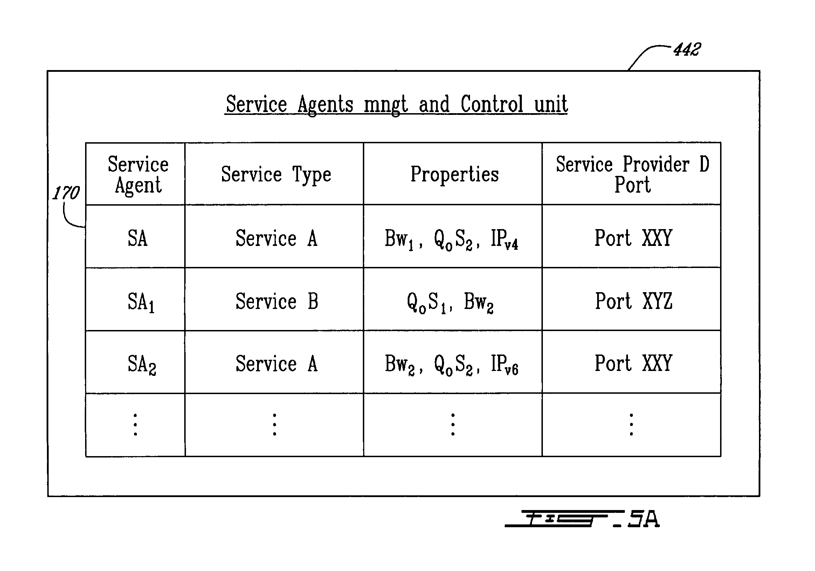

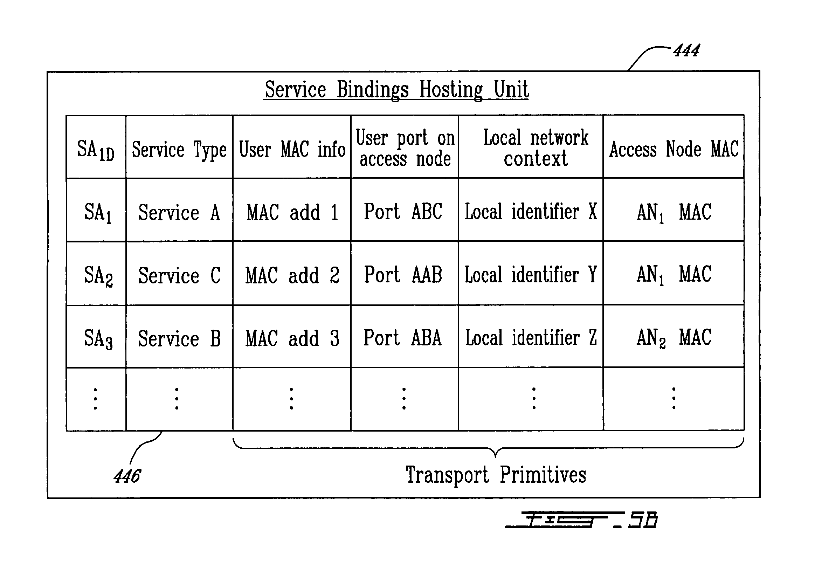

The access edge node's role 160 is to act as a centralized entry point on the access domain 115 for a plurality of network service providers 140 and application service providers 150. In accordance with another embodiment of the present invention, the access edge node is also responsible for the creation, management and hosting of service agents 170 and service bindings (not shown in Figure 2, but depicted on Figure 4). Each of the service agents 170 corresponds to one of the service provider domains (140 or 150), and manages and controls therefor a VLAN over the access network 130. The expression 'service binding' refers to a binding between the user domain 110 and one of the network service provider domain 140 or one of the application service provider domain 150. The access edge node and the concepts of service agents and service bindings will be described in further detail in the description referring to Figures 4, 5a and 5b.

Turning now to the user domains 110, the latter rely on the access domain 115 for handling end-to-end communication with the network service providers 140 and the application service providers 150. It should be noted that in the present description, use of the word 'domain' refers to one or multiple network elements sharing similar functional features. Thus, in the context of the present invention, the expression 'user domains' may refer to independent computers, local networks of computers connected through a router either physically or wirelessly, wireless phones, Personal Digital Assistants (PDAs), and all other devices that are capable of data communication over a data network such as network 200. Additionally, the expression 'user domain' is intended to also include multiple simultaneous data traffic sessions performed with a multitude of devices, through one single user port. For example, a user could concurrently access different applications and network services such as Internet access, video conferencing, and television programs with one or multiple devices through a user domain located VLAN, or one single user port referred to herein as 'user domain'. The expression 'user domain' is also used to encompass multiple logical subnets using VLANs.

The network service providers 140 refer to entities that use the access domain 115 to provide IP addressing and connectivity to another IP network, and to offer and deliver specific application. In the context of data traffic with the user domains 110, the network service providers 140 typically own and assign IP addresses to the user domains 110, using an identification based on for example Remote Authentication Dial-In User Service (RADIUS). The network service providers 140 may further perform user-level authentication and authorization if desired and/or necessary.

The application service providers 150 use the access domain 115 to offer and deliver application to end-users of the user domains 110. Examples of such applications include gaming, video on demand, videoconferencing, and many other possible applications. It is however the access domain 115 that assigns IP addresses on behalf of the applications service providers to the user domains 110. If desired, the application service providers 150 can also perform authentication at the user-level and authorization if necessary. It should be noted that in the foregoing description, the expression 'service providers' and 'service providers domains' will be alternatively used to represent concurrently both network service providers 140 and application service providers 150, and the expression 'service provider' represents one of the network service providers 140 or application service providers 150.

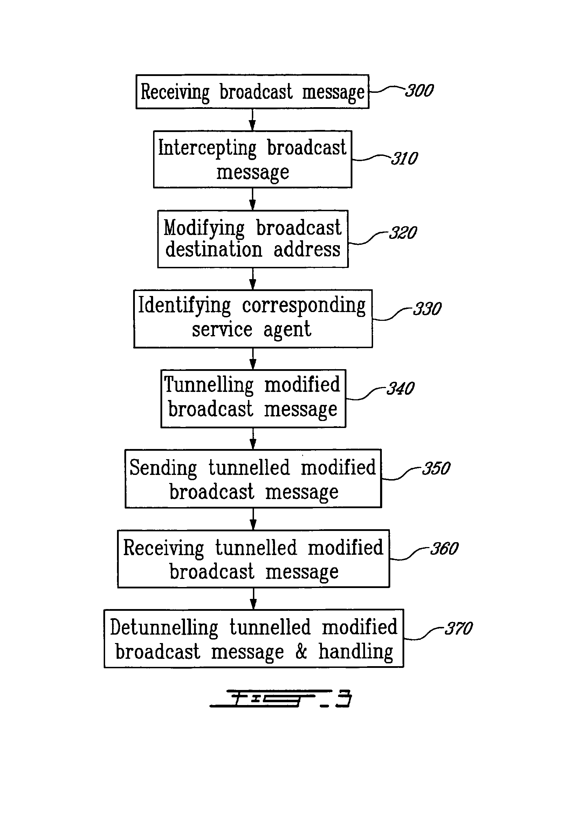

Reference is now made to Figure 3 that represents a simplified flowchart of a method for handling broadcast messages in accordance with the present invention. The present method handles broadcast messages sent from the user domains 110 over the access domain 115. The following description of the method addresses one broadcast message, but several broadcast messages received from one or multiple user domains 110 can concurrently be treated in the context of the present invention, and the treatment of a single broadcast message rather represents the steps performed by the method for each of the broadcast messages, treated concurrently or not. The method starts with a step 300 for receiving the broadcast message at the access node 120. The method pursues with the intercepting the broadcast message in step 310. The broadcast message is intercepted by the access node 110 so as to avoid the broadcast message to be further broadcasted over the access domain 115 and thereby loading the switches/ routers of the access domain 115. The access node 120 then modifies in step 320 the broadcast message. More particularly, the access node 120 modifies the destination address of the broadcast message. As known in the art, in IP networks, an address is used to indicate to the receiving switches/routers is a broadcast message. In the case of IP, the destination address which represents that the message is a broadcast message is the address (255.255.255.255). Thus, when the access node receives a message having a L3 destination address of (255.255.255.255), it automatically knows that the received message is a broadcast message. But in step 320 of the present method, the destination address is modified so that the three low order bytes of the address correspond to an access node identifier (16 bits) and a user port number (8 bits) on which the broadcast message was received.

The method optionally pursues with step 330. Step330 is performed only in networks corresponding to the second embodiment of the present invention, i.e. when the access edge node and the access node are capable of enforcing service bindings. In the case that the network 200 is not capable of handling and enforcing service bindings, step 330 of the method is not performed. Thus, in the case of network 200 in accordance with the second embodiment of the present invention, a corresponding service agent is identified. The corresponding service agent can be identified at the access node 110 based on service bindings information stored therein, and using the user port information to determine whether a service binding exists for that user port from which the broadcast message was received.

The method then continues in step340 wherein the modified broadcast message is tunnelled. For doing so, the modified service agent is tunnelled within a Unicast message. The Unicast message is given a destination address corresponding to an address of the access edge node 160, the source address corresponds to an address of the access node, and a Virtual Local Area Network Tag of the Unicast message is given a value corresponding to the identified service agent of step 330. In the case that no service agent was identified, of that service bindings are not supported by the access node and the access edge node, a default value is used instead. The tunnelled modified broadcast message is then sent in step 350 on the access network 130 to the access edge node 160. The tunnelled modified broadcast message is received at the access edge node 160, in step 360. Afterwards, the access edge node 160 determines that the received message is a tunnelled modified broadcast message, and detunnels and handles the latter locally in step 370.

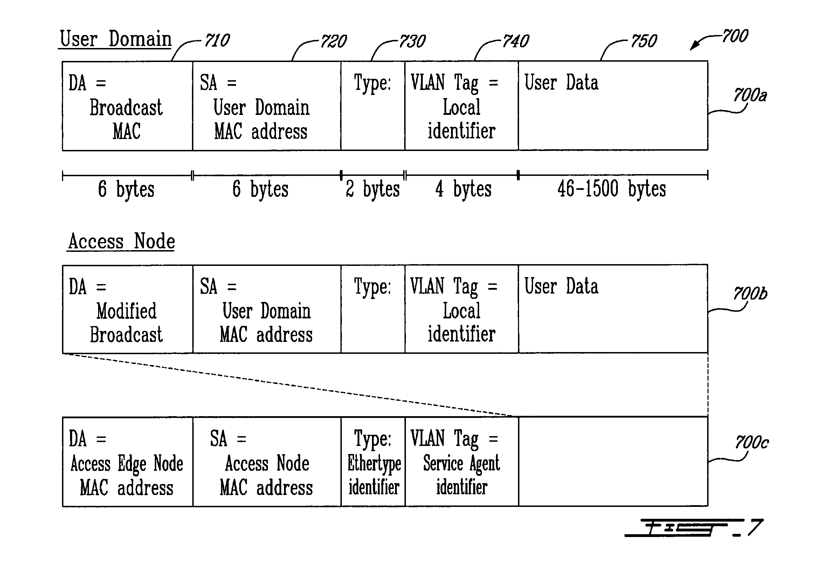

Reference is now made to Figure 7, which is a diagram representing modifications performed on an broadcast message 700 in accordance with the present invention. As known in the art, broadcast messages are upstream traffic. Upstream traffic refers to traffic sent from the user domain 110 through the access domain 115. Figure 7 depict an Ethernet Broadcast messages for exemplary purposes, such as described in International Electrical and Electronic Engineering (IEEE) 802.3ac. Broadcast messages typically include the following fields: a Destination Address (DA) 710, a Source Address (SA) 720, a Type 730, a VLAN Tag 740 and User Data 750. The Destination Address 710 refers to a dedicated Ethernet MAC address (255.255.255.255) which indicates that the message is a broadcast message, and consists of 6 bytes. The Source Address 720 indicates from which Ethernet MAC address the broadcast message originates, and contains 6 bytes. The Type field 730 is 2 bytes long. The VLAN Tag 740 is 4 bytes long, and usually refer to a VLAN identifier only known and meaningful to the destination address and the source address. Finally, the user data 750 varies between 46 - 1500 bytes, and contains data being sent from the source address 720 to the destination address 710. In the particular case of broadcast messages, the user data 750 represents the data to be broadcasted throughout the network 200.

As previously described, the broadcast message700 originates from the User Device 110, and in the context of the present invention, undertakes modifications through the network. The user device 110 generates a broadcast message 700a, in which: the Destination Address 710 corresponds to a broadcast MAC address, the Source Address 720 is the user device MAC address, the VLAN Tag 740 corresponds to a local service identifier of the user device, and the user data 750 corresponds to the data to be broadcasted through the access domain 115. The broadcast message 700a generated by the user device 110 is sent and received by the access node 120, where is it identified as a broadcast message because of its destination address, and is intercepted. The access node performs some modifications prior to forwarding the broadcast message over the access network 130. More particularly, the destination address 710 is modified to replace the three lower order bytes to correspond to an access node identifier of 16 bits and a user port number on which the broadcast message was received, having 8 bits, as represented by the broadcast message 700b. The modified broadcast message is afterwards either tunnelled or encapsulated in a unicast message. The Unicast message has a destination address corresponding to a MAC address of the access edge node, and a source address corresponding to an access node MAC address. The Unicast message 700c also includes a Type which represents an Ethertype identifier, which is a reserved value, indicating that the Unicast message contains a broadcast message. Finally, in the case of the second embodiment of the present invention, the VLAN Tag field of the Unicast message 700c contains the service agent identifier, or a default value in cases where no existing service bindings correspond to the current user port number.The Unicast message 700c is afterwards sent over the access network 130.

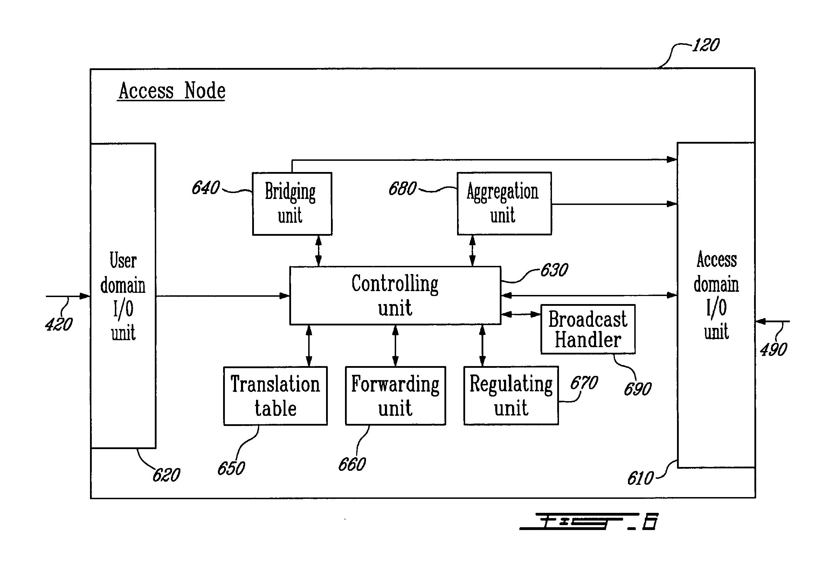

Reference is now made to Figure6 which shows a schematic representation of an access node in accordance with the teachings of the present invention.Because of its location in the access domain 115, the access node 120 includes an access domain input/output unit 610 for communicating with the access network 130 of the access domain 115 and with the access edge node 160. The access node 120 also includes a user domains input/output unit 620 for communicating with the user domains 110. The access node 120 also includes a controlling unit 630 and a broadcast handler 690. The access node 120 may also include, if desired, such components as a bridging unit 640, a translation table 650, a forwarding unit 660, a regulating unit 670 and an aggregation unit 680, so as to be able to perform operations generally performed by access nodes. The various components of the access node may consist of dedicated hardware, combined hardware, or software, interconnected so as to allow proper functioning of the access node.

The user domain input/output unit 620 receives many different types of messages, including broadcast messages, such as represented by 420. The broadcast message enters the user domain input/output unit 620 at one of the user ports of the user domain input/output unit 620. The user domain input/output unit 620 forwards the received message to the controlling unit 630 which determines that the received message 420 is a broadcast message, and forwards the received message to the broadcast handler 690, along with the information of which user port of the user domain input/output unit 620 received the message 420. The broadcast handler 690 proceeds with modifying the broadcast message as previously described for Figure 7, and forward the latter in a Unicast message through the access domain input/output unit 610.

As previously mentioned, a second embodiment of the present invention relies on the concept of service binding for ruling data traffic over the access domain 115. To allow a better understanding of the second embodiment of the present invention, a brief description is now provided to explain the concept of service bindings. Service bindings are created at the access edge node 160 to manage transport relationships and traffic. Each service binding is established between one of the user domains and one of the service providers, and directly impacts the serving access node 120 and one of the serving agents 170 of the access edge node 160. Conceptually speaking, the creation of a service binding corresponds to adding the identified user domain to a VLAN corresponding to the service provider domain over the access domain, which VLAN is managed by the access edge node. For each VLAN managed by the access edge node, a service agent is created at the access edge node. Thus, each service binding represents a tradable business entity, which guarantees delivery of the corresponding service, with the right integrity and QoS, between a specific user port of the user domain and a specific provider port of the service provider. Service bindings are created, managed and hosted in the access edge node, and exist in combination with the service agents 170.

Thus, in accordance with the second embodiment of the present invention, the aggregation unit 680 of the access node 120 hosts the service bindings related information. Service bindings related information contains specific service binding information (in the form of service agent identity and service type), identification on a port of the access node which received the service request related message, and local network context of the user domain. Based on this information, it is possible for the aggregation unit 680 to provide the service agent identity that corresponds to the user port identity on which the broadcast message was received. Thus the broadcast handler 690 further communicates with the aggregation unit 680 either directly or through the controlling unit 630 to obtain the service agent identity to be incorporated in the Unicast message as previously described.

Reference is now made to Figure 4 which represents a schematic representation of an access edge node in accordance with the teachings of the present invention. The access edge node 160 includes an access domain input/output unit 410, a controlling unit 450 and a broadcast handler 495. The access domain input/output unit 410 receives the tunneled modified broadcast messages 700c. The received message 700c is forwarded to the controlling unit 450. Once the received message 700c is properly detunneled by the controlling unit 450, it is handed over to the broadcast handler 495 for proper handling. The controlling unit 450 also implicates the broadcast handler 495. The access domain input/output unit 410, the controlling unit 450 and the broadcast handler 495 may be independent hardware, or combined hardware, or software, and communicates either directly or indirectly with one another.

In the case of the second embodiment of the present invention, the access edge node also includes a network/application service provider domains input/output unit 430 for communicating with the network service providers 140 and application service providers 150 over the regional network 135. Furthermore, the access edge node 160 includes a service agent unit 440, a controlling unit 450, and may further include a translation table 460, a forwarding unit 470 and a regulating unit 480.

The service agent unit 440 is composed of a service agents management and control unit 442 and a service bindings hosting unit 444. The service agent unit 440 keeps existing service agents' 170 information in the service agents' management and control unit 442. The service agents' management and control unit 442 in turn is responsible for the creation and management of the service bindings 446. For doing so, the service agents management and control unit 442 determines when new service bindings 446 are required or can be removed, and proceeds with the creation/removal of service bindings 446. The service agents' management and control unit 442 is also responsible for the adding/removal of user devices to existing service bindings. Furthermore, the service agents management and control unit 442 is responsible for ensuring synchronicity of service bindings 446 related information with access nodes with which it is interacting.

Reference to Figure 5a, which represents an exemplary tabular representation of the content of the service agents' management and control unit 442, is now concurrently made with Figure 4. Each of the rows of Figure 5a, at the exception of the first row, which is a header row, represents exemplary content of some of the service agents 170 managed and controlled by the service agents management and control unit 442. Each of the columns of Figure 5a corresponds to specific information, maintained by the service agents' management and control unit 4.42, for each of the service agents 170. The first column represents an identification of the service agent 170. That identification is typically a number or a service agent identifier corresponding to the service agent. In accordance to a preferred embodiment of the invention, each service agent in the access edge node has a unique service agent identifier, and corresponds to one specific service provider domain 140 or 150. The second column refers to an identification of a specific service type for the corresponding service agent. For example, in cases where one service provider domain 140 or 150 offers multiple services, each of the services offered is associated with a different service type so as to differentiate between the various services of a service provider domain. The third column identifies the preferred or necessary Quality of Service (QoS) required for properly transporting data traffic for that service provider domain and the related service type. Exemplary criteria for QoS may include delay, bit error rate, bandwidth, and preferred protocol.The fourth column indicates a port to be used in the regional network to communicate with the corresponding service provider domain. In addition to this content, the service agents' management and control unit 442 includes sufficient logical software and hardware to create additional service agents and remove unnecessary service agents. It should be noted as well that even though the content of the service agents' management and control unit has been represented in Figure 5a in the form of a table, such content is not limited thereto. The service agents' management and control unit could be composed of a relational database, hard coded components, microprocessors, programming library, etc...

Reference is now made to Figure 5b, which represents an exemplary tabular representation of the content of the service bindings hosting unit 444, concurrently with Figure 4. Each of the rows of Figure 5b, at the exception of the header row, represents exemplary content of some of the service bindings 446 hosted in the service bindings hosting unit 444. Each of the columns of Figure 5b corresponds to specific information, hosted in the service bindings hosting unit 444, for each of the service bindings 446. The first column represents an identification of a corresponding service agent, by using for example the service agent identifier of the service agent. The second column identifies the service type, as described in relation with Figure 5a. The other columns represent the transport primitives for data traffic related to the service binding. More specifically, the fourth column identifies a user domain Media Access Control (MAC) address. The fourth column consists of an identification of a port used by the user domain on the serving access node. The fifth column corresponds to the local network arbitrary identifier used by the user domain, and may include for example implicit or explicit VLAN information. The sixth column refers to a virtual MAC address of the access node serving the user domain. Hence, each service binding 446 binds together one of the service agents, one of the user domains and one of the access nodes for providing data traffic between one user domain and one service provider domain 140 or 150. It should be noted that even though the content of the service bindings hosting unit 444 has been represented in Figure 5b in the form of a table, such content is not limited thereto. The service bindings hosting unit could be composed of a relational database, hard coded components, microprocessors, programming library, etc...

Furthermore, the service bindings hosting unit may further contain a seventh column which includes an IP address uniquely identifying the user domain or a user device thereof That unique IP address could be provided to the user domain or user device by the access edge node through a protocol such as Dynamic Host Configuration Protocol (DHCP), using for example Broadcast mechanism that could be performed prior to the service request message. The combination of the service agent identifier and the user domain or user device unique IP address thus represents a simple and reliable way of quickly relating incoming messages to the proper service binding. Typically, once the service binding has been created, the access node has been informed thereof, and the data traffic is being aggregated over the access domain in accordance with the service binding, the aggregated data traffic received at the access edge node is disaggregated prior to its forwarding to the corresponding service provider domain using the information provided in the service bindings hosting unit. More particularly, in the case where the access domain is an Ethernet network, the service agent identifier is provided, for example, in the field known as the VLAN Tag of Unicast, Multicast and Broadcast messages, while the user domain or user device IP address is provided in IP messages embedded in the Ethernet messages. Based on the service agent identifier provided in the VLAN Tag field of Ethernet message, and on the IP address provided in the embedded IP message, the service agent unit 440 can disaggregate the data traffic and ensures its forwarding to the corresponding service provider domain, and inclusion of necessary information on the sending user domain, such as user MAC info and its local network context.

Then, the controlling unit 450 informs the access node serving the user domain identified in the service request related message, through a service binding related message 490 sent by the access domain input/output unit 410, of the creation of the service binding 446. The controlling unit 450 also interacts with the translation table 460. Since each service agent 170 of the service agents' management and control unit is uniquely identified by a service agent identifier, it is necessary to keep in the translation table a mapping between the service agent identifier corresponding to service agents 170 and corresponding service provider domains (140 or 150). Thus, upon receipt of data traffic at the access domain input/output unit 410 having a destination address corresponding to a virtual MAC address for the access edge node 160 and a VLAN tag corresponding to one of the service agent identifier, the controlling unit 450 consults the translation table 460 to obtain a fast translation of the access edge node virtual MAC address to the destination service provider domain (140 or 150) address corresponding to the service agent identifier provided in the VLAN tag.

The controlling unit 450 further consults with the forwarding unit 470, to determine whether received data traffic at the access domain input/output unit 410 is to be directly forwarded to the service provider domains input/output unit without any modification.

Finally, the controlling unit 450 can also interact with a regulating unit 480, which can perform, on received data traffic at either the access domain input/output unit 410 and the network/application service providers domain input/output unit 430, downstream/upstream traffic policing and marking, traffic remarking, as indicated and/or required by corresponding service agents 170.

As can be appreciated, the modifications to thebroadcastmessages are visible only to the access node 120 and the access edge node 160. The modifications to the broadcast message are transparent to the user device 110 and the access network 130. The modifications are possible because of the adaptations performed at the access node 120 and the access edge node 160. The results of the modifications allow for a reduction of data traffic caused by the interception of broadcast messages from their entering the access domain, and their systematic forwarding in a Unicast message for handling at the access edge node.

Although several preferred embodiments of the method and nodes of the present invention have been illustrated in the accompanying Drawings and described in the foregoing Detailed Description, it will be understood that the invention is not limited to the embodiments disclosed, but is capable of numerous rearrangements, modifications and substitutions without departing from the scope of the invention as set forth and defined by the following claims.

## Claims

1. A method for handling broadcast messages over an access domain (115), the method comprising steps of:
- receiving at an access node (120) a broadcast message from a user domain (110), the broadcast message comprising a MAC address of the user domain (110) as a source address; and
- intercepting at the access node (120) the received broadcast message and forwarding the received broadcast message to an access edge node (160) of the access domain (115) in a Unicast message;
- wherein the forwarding step includes tunnelling the intercepted broadcast message, **characterized in that** the tunnelling of the intercepted broadcast message is performed in the Unicast message; and
- wherein the Unicast message has a source address corresponding to a MAC address of the access node (120),
- wherein the broadcast message tunnelled in the Unicast message has a destination address that is a broadcast MAC address modified to include an access node identifier and a user port number of the access node.

2. The method in accordance with claim 1, wherein the Unicast message has a destination address corresponding to an address of the access edge node (160).

3. The method in accordance with claim 1, wherein the Unicast message has a VLAN Tag field corresponding to a default value recognized by the access edge node (160).

4. The method in accordance with claim 1, further comprising steps of:
- creating a service binding at the access edge node (160), the service binding ruling data traffic between the user domain (110) and the access edge node (160) by committing the access node (120) serving the user domain (110) and the access edge node (160) in a manner of managing data traffic therebetween over the access domain (115);
- informing the access node (120) serving the user domain (110) of the created service binding; and
- enforcing the created service binding at the access node (120) and the access edge node (160) by:
- forwarding the received broadcast message to the access edge node (160) in the Unicast message wherein:
- the destination address of the Unicast message is an access edge node MAC address; and
- a VLAN Tag field of the Unicast message is a service agent identifier corresponding to the created service binding.

5. An access edge node (160) for handling tunnelled broadcast messages transmitted over an access domain (115), the access edge node (160) comprising:
- an input unit (700) for receiving messages;
- a controlling unit (450) for identifying, from the received messages, broadcast messages that are tunnelled in Unicast messages and that have a source address corresponding to a MAC address of an access node (120) serving a user domain (110) sending the broadcast messages; and
- a broadcast handler (495) for detunneling the identified tunnelled broadcast messages and for handling the detunneled broadcast messages,
- wherein each of the broadcast messages tunnelled in the Unicast messages has a destination address that is a broadcast MAC address modified to include an access node identifier and a user port number of the access node.

6. The access edge node (160) of claim 5, wherein the broadcast messages tunnelled in Unicast messages have a destination address corresponding to the access edge node (160).

7. The access edge node (160) of claim 5, further comprising:
- a service agent unit (440) for creating a service binding, the service binding ruling data traffic between the user domain (110) and the access edge node (160) over the access domain (115), the service binding committing the access node (120) serving the user domain (110) and the access edge node (160) in handling of traffic therebetween over the access domain (115);
- the controlling unit (450) informing the access node (120) serving the user domain (110) of the creation of the service binding through an output unit (430);
- the identified tunnelled broadcast messages including a service agent identifier; and
- the broadcast handler (495) handling the detunnelled broadcast messages based on the included service agent identifier.

8. The access edge node (160) of claim 7, wherein the broadcast messages tunnelled in Unicast messages have a destination address corresponding to the access edge node (160).

9. The access edge node (160) of claim 7, wherein the service agent identifier is included in a Virtual Local Area Network Tag field of the Unicast messages.

10. An access node (120) for handling broadcast messages received from user domains (110), the access node (120) comprising:
- an input unit (620) for receiving messages from user domains (110);
- a controlling unit (630) for identifying broadcast messages from the received messages;
- a broadcast handler (690) for tunnelling each of the identified broadcast messages in a Unicast message destined to an access edge node (160), the Unicast message comprising a source address corresponding a MAC address of the access node (120) ; and
- an output unit (610) for transmitting the tunnelled broadcast messages,
- wherein each of the broadcast messages tunnelled in the Unicast messages has a destination address that is a broadcast MAC address modified to include an access node identifier and a user port number of the access node.

11. The access node (120) of claim 10, wherein the Unicast message includes a destination address corresponding to the access edge node (160).

12. The access node (120) of claim 10, wherein:
- the input unit (620) further receives service bindings related information;
- the access node (120) further comprises:
- an aggregation unit (680) for storing service bindings related information, the service bindings related information including service agent identifier.

13. The access node (120) of claim 12, wherein the broadcast handler (690) further includes in the tunnelled broadcast messages one of the service agent identifiers in a Virtual Local Area Network Tag field of the Unicast messages.

## Patentansprüche

1. Verfahren zum Handhaben von Broadcast-Nachrichten (Rundruf-Nachrichten) über eine Zugangsdomäne (115), wobei das Verfahren die Schritte umfasst:
- Empfangen einer Broadcast-Nachricht von einer Benutzer-Domäne (110) an einem Zugangsknoten (120), wobei die Broadcast-Nachricht eine MAC-Adresse der Benutzer-Domäne (110) als eine Quelladresse umfasst; und
- Abfangen an dem Zugangsknoten (120) der empfangenen Broadcast-Nachricht und Weiterleiten der empfangenen Broadcast-Nachricht an einen Zugangskantenknoten (160) der Zugangsdomäne (115) in einer Unicast-Nachricht;
- wobei der weiterleitende Schritt ein Tunneln der abgefangenen Broadcast-Nachricht einschließt,
**dadurch gekennzeichnet, dass** das Tunneln der abgefangenen Broadcast-Nachricht in der Unicast-Nachricht durchgeführt wird; und
- wobei die Unicast-Nachricht eine Quelladresse aufweist, die einer MAC-Adresse des Zugangsknotens (120) entspricht,
- wobei die Broadcast-Nachricht, die in der Unicast-Nachricht getunnelt wird, eine Zieladresse aufweist, die eine Broadcast-MAC-Adresse ist, die modifiziert ist, um einen Zugangsknoten-Identifikator und eine Benutzerportnummer des Zugangsknotens einzuschließen.

2. Verfahren nach Anspruch 1, wobei die Unicast-Nachricht eine Zieladresse aufweist, die einer Adresse des Zugangskantenknotens (160) entspricht.

3. Verfahren nach Anspruch 1, wobei die Unicast-Nachricht ein VLAN-Tag-Feld entsprechend einem Standardwert aufweist, der von dem Zugangskantenknoten (160) erkannt wird.

4. Verfahren nach Anspruch 1, weiter mit den Schritten:
- Erzeugen einer Dienstbindung an dem Zugangskantenknoten (160), wobei die Dienstbindung Datenverkehr zwischen der Benutzer-Domäne (110) und dem Zugangskantenknoten (160) durch Binden des Zugangsknotens (120), der die Benutzer-Domäne (110) bedient und des Zugangskantenknotens (160) in einer Weise eines Verwaltens von Datenverkehr zwischen diesen über die Zugangsdomäne (115) beherrscht;
- Informieren des Zugangsknotens (120), der die Benutzer-Domäne (110) bedient, von der erzeugten Dienstbindung; und
- Erzwingen der erzeugten Dienstbindung an dem Zugangsknoten (120) und dem Zugangskantenknoten (160) durch:
- Weiterleiten der empfangenen Broadcast-Nachricht an den Zugangskantenknoten (160) in der Unicast-Nachricht wobei:
- die Zieladresse der Unicast-Nachricht eine Zugangskantenknoten-MAC-Adresse ist; und
- ein VLAN-Tag-Feld der Unicast-Nachricht ein Dienstagent-Identifikator entsprechend der erzeugten Dienstbindung ist.

5. Zugangskantenknoten (160) zum Handhaben getunnelter Broadcast-Nachrichten, die über eine Zugangsdomäne (115) übertragen werden, wobei der Zugangskantenknoten (160) umfasst:
- eine Eingabeeinheit (700) zum Empfangen von Nachrichten;
- eine Steuereinheit (450) zum Identifizieren von Broadcast-Nachrichten aus den empfangenen Nachrichten, die in Unicast-Nachrichten getunnelt sind und die eine Quelladresse aufweisen, die einer MAC-Adresse eines Zugangsknotens (120) entspricht, der eine Benutzer-Domäne (110) bedient, die die Broadcast-Nachrichten sendet; und
- einen Broadcast-Handhaber (495) zum Enttunneln der identifizierten, getunnelten Broadcast-Nachrichten und zum Handhaben der enttunnelten Broadcast-Nachrichten,
- wobei jede der Broadcast-Nachrichten, die in den Unicast-Nachrichten getunnelt ist, eine Zieladresse aufweist, die eine Broadcast-MAC-Adresse ist, die modifiziert ist, um einen Zugangsknoten-Identifikator und eine Benutzerportnummer des Zugangsknotens einzuschließen.

6. Zugangskantenknoten (160) nach Anspruch 5, wobei die Broadcast-Nachrichten, die in Unicast-Nachrichten getunnelt sind, eine Zieladresse aufweisen, die dem Zugangskantenknoten (160) entspricht.

7. Zugangskantenknoten (160) nach Anspruch 5, weiter mit:
- einer Dienstagenteinheit (440) zum Erzeugen einer Dienstbindung, wobei die Dienstbindung einen Datenverkehr zwischen der Benutzer-Domäne (110) und dem Zugangskantenknoten (160) über die Zugangsdomäne (115) beherrscht, wobei die Dienstbindung den Zugangsknoten (120), der die Benutzer-Domäne (110) bedient und den Zugangskantenknoten (160) beim Handhaben von Verkehr zwischen diesen über die Zugangsdomäne (115) bindet;
- der Steuereinheit (450), die den Zugangsknoten (120), der die Benutzer-Domäne (110) bedient, von der Erzeugung der Dienstbindung durch eine Ausgabeeinheit (430) informiert;
- den identifizierten, getunnelten Broadcast-Nachrichten, die einen Dienstagent-Identifikator einschließen; und
- dem Broadcast-Handhaber (495), der die enttunnelte Broadcast-Nachrichten basierend auf dem eingeschlossenen Dienstagent-Identifikator handhabt.

8. Zugangskantenknoten (160) nach Anspruch 7, wobei die Broadcast-Nachrichten, die in Unicast-Nachrichten getunnelt sind, eine Zieladresse aufweisen, die dem Zugangskantenknoten (160) entspricht.

9. Zugangskantenknoten (160) nach Anspruch 7, wobei der Dienstagent-Identifikator in einem Virtual-Local-Area-Network-Tag-Feld der Unicast-Nachrichten eingeschlossen ist.

10. Zugangsknoten (120) zum Handhaben von Broadcast-Nachrichten, die von Benutzer-Domänen (110) empfangen werden, wobei der Zugangsknoten (120) umfasst:
- eine Eingabeeinheit (620) zum Empfangen von Nachrichten von Benutzer-Domänen (110);
- eine Steuereinheit (630) zum Identifizieren von Broadcast-Nachrichten aus den empfangenen Nachrichten;
- einen Broadcast-Handhaber (690) zum Tunneln jeder der identifizierten Broadcast-Nachrichten in einer Unicast-Nachricht, die an einen Zugangskantenknoten (160) gerichtet ist, wobei die Unicast-Nachricht eine Quelladresse umfasst, die einer MAC-Adresse des Zugangsknotens (120) entspricht; und
- einer Ausgabeeinheit (610) zum Übertragen der getunnelten Broadcast-Nachrichten,
- wobei jede der Broadcast-Nachrichten, die in den Unicast-Nachrichten getunnelt ist, eine Zieladresse aufweist, die eine Broadcast-MAC-Adresse ist, die modifiziert ist, um einen Zugangsknoten-Identifikator und eine Benutzerportnummer des Zugangsknotens einzuschließen.

11. Zugangsknoten (120) nach Anspruch 10, wobei die Unicast-Nachricht eine Zieladresse einschließt, die dem Zugangskantenknoten (160) entspricht.

12. Zugangsknoten (120) nach Anspruch 10, wobei:
- die Eingabeeinheit (620) weiter Dienstbindungs-bezogene Information empfängt;
- der Zugangsknoten (120) weiter umfasst:
- eine Aggregationseinheit (680) zum Speichern von Dienstbindungs-bezogener Information, wobei die Dienstbindungs-bezogene Information einen Dienstagent-Identifikator einschließt.

13. Zugangsknoten (120) nach Anspruch 12, wobei der Broadcast-Handhaber (690) weiter in den getunnelten Broadcast-Nachrichten einen der Dienstagent-Identifikatoren in einem Virtual-Local-Area-Network-Tag-Feld der Unicast-Nachrichten einschließt.

## Revendications

1. Une méthode pour traiter des messages de diffusion à travers un domaine d'accès (115), la méthode comprenant les étapes de:
- recevoir à un noeud d'accès (120) un message de diffusion d'un domaine usager (110), le message de diffusion comprenant une adresse MAC du domaine usager (110) comme une adresse d'origine; et
- intercepter au noeud d'accès (120) le message de diffusion reçu et transférer le message de diffusion reçu à un noeud d'extrémité d'accès (160) du domaine d'accès (115) dans un message de monodiffusion;
- dans laquelle l'étape de transférer inclut une étape de tunnéliser le message de diffusion intercepté, **caractérisée en ce que** l'étape de tunnéliser le message de diffusion intercepté est effectuée dans le message de monodiffusion; et
- dans laquelle le message de monodiffusion a une adresse d'origine correspondant à une adresse MAC du noeud d'accès (120),
- dans laquelle le message de diffusion tunnélisé dans le message de monodiffusion a une adresse de destination qui est une adresse MAC de diffusion modifiée pour inclure un identifiant de noeud d'accès et un numéro de port utilisateur du noeud d'accès.

2. La méthode selon la revendication 1, dans laquelle le message de monodiffusion a une adresse de destination correspondant à une adresse du noeud d'extrémité d'accès (160).

3. La méthode selon la revendication 1, dans laquelle le message de monodiffusion a un champ marqueur de réseau local virtuel correspondant à une valeur par défaut reconnue par le noeud d'extrémité d'accès (160).

4. La méthode selon la revendication 1, comprenant en outre les étapes de:
- créer une liaison de service au noeud d'extrémité d'accès (160), la liaison de service régissant du trafic de données entre le domaine usager (110) et le noeud d'extrémité d'accès (160) en engageant le noeud d'accès (120) desservant le domaine d'accès (110) et le noeud d'extrémité d'accès (160) de manière à gérer le trafic de données entre le noeud d'accès (120) et le noeud d'extrémité d'accès (160) à travers le domaine d'accès (115);
- informer le noeud d'accès (120) desservant le domaine usager (110) de la liaison de service créée; et
- faire appliquer la liaison de service créée au noeud d'accès (120) et au noeud d'extrémité d'accès (160) en:
- transférant le message de diffusion reçu au noeud d'extrémité d'accès (160) dans un message de monodiffusion dans lequel:
- l'adresse de destination du message de monodiffusion est une adresse MAC de noeud d'extrémité d'accès; et
- un champ marqueur de réseau local virtuel du message de monodiffusion est un identifiant d'agent de service correspondant à la liaison de service créée.

5. Un noeud d'extrémité d'accès (160) pour traiter des messages de diffusion tunnélisés transmis à travers un domaine d'accès (115), le noeud d'extrémité d'accès (160) comprenant:
- une unité d'entrée (700) pour recevoir des messages;
- une unité de contrôle (450) pour identifier, des messages reçus, des messages de diffusion qui sont tunnélisés dans des messages de monodiffusion et qui ont une adresse d'origine correspondant à une adresse MAC d'un noeud d'accès (120) desservant un domaine usager (110) envoyant les messages de diffusion; et
- un traiteur de diffusion (495) pour détunnéliser les messages de diffusion tunnélisés identifiés et pour traiter les messages de diffusion détunnélisés,
- dans lequel chacun des messages de diffusion tunnélisés dans les messages de monodiffusion a une adresse de destination qui est une adresse MAC de diffusion modifiée pour inclure un identifiant de noeud d'accès et un numéro de port utilisateur du noeud d'accès.

6. Le noeud d'extrémité d'accès (160) selon la revendication 5, dans lequel les messages de diffusion tunnélisés dans les messages de monodiffusion ont une adresse de destination correspondant au noeud d'extrémité d'accès (160).

7. Le noeud d'extrémité d'accès (160) selon la revendication 5, comprenant en outre:
- une unité d'agent de service (440) pour créer une liaison de service, la liaison de service régissant du trafic de données entre le domaine usager (110) et le noeud d'extrémité d'accès (160) à travers le domaine d'accès (115), la liaison de service engageant le noeud d'accès (120) desservant le domaine usager (110) et le noeud d'extrémité d'accès (160) en traitant du trafic entre le noeud d'accès (120) et le noeud d'extrémité d'accès (160) à travers le domaine d'accès (115);
- l'unité de contrôle (450) informant le noeud d'accès (120) desservant le domaine d'accès (110) de la création de la liaison de service à travers une unité de sortie (430);
- les messages de diffusion tunnélisés identifiés incluant un identifiant d'agent de service; et
- un traiteur de diffusion (495) traitant les messages de diffusion détunnélisés basé sur l'identifiant d'agent de service inclus.

8. Le noeud d'extrémité d'accès (160) selon la revendication 7, dans lequel les messages de diffusion tunnélisés dans les messages de monodiffusion ont une adresse de destination correspondant au noeud d'extrémité d'accès (160).

9. Le noeud d'extrémité d'accès (160) selon la revendication 7, dans lequel l'identifiant d'agent de service est inclus dans un champ marqueur de réseau local virtuel des messages de monodiffusion.

10. Un noeud d'accès (120) pour traiter des messages de diffusion reçus de domaines usagers (110), le noeud d'accès (120) comprenant:
- une unité d'entrée (620) pour recevoir des messages des domaines usagers (110);
- une unité de contrôle (630) pour identifier des messages de diffusion parmis des messages reçus;
- un traiteur de diffusion (690) pour tunnéliser chacun des messages de diffusion identifiés dans un message de monodiffusion destiné à un noeud d'extrémité d'accès (160), le message de monodiffusion comprenant une adresse d'origine correspondant à une adresse MAC de noeud d'accès (120); et
- une unité de sortie (610) pour transmettre les messages de diffusion tunnélisés,
- dans lequel chacun des messages de diffusion tunnélisés dans les messages de monodiffusion a une adresse de destination qui est une adresse MAC de diffusion modifiée pour inclure un identifiant de noeud d'accès et un numéro de port utilisateur du noeud d'accès.

11. Le noeud d'accès (120) selon la revendication 10, dans lequel le message de monodiffusion inclut une adresse de destination correspondant au noeud d'extrémité d'accès (160).

12. Le noeud d'accès (120) selon la revendication 10, dans lequel:
- l'unité d'entrée (620) reçoit en outre de l'information reliée à des liaisons de service;
- le noeud d'accès (120) comprend en outre:
- une unité d'agrégation (680) pour sauvegarder l'information reliée aux liaisons de service, l'information reliée aux liaisons de service incluant un identifiant d'agent de service.

13. Le noeud d'accès (120) selon la revendication 12, dans lequel le traiteur de diffusion (690) inclut en outre dans les messages de diffusion tunnélisés un des identifiants d'agent de service dans un champ marqueur de réseau local virtuel des messages de monodiffusion.
